# EUROPEAN PATENT APPLICATION

(11) **EP 3 206 069 A1**
(43) Date of publication of application: **16.08.2017**
(21) Application number: 15849427.8
(22) Date of filing: 16.03.2015
(51) Int. Cl.: G02B 6/44, G02B 6/46

(54) **OPTICAL FIBER CABLE AND METHOD FOR INSTALLING OPTICAL FIBER CABLE**

(30) Priority: 06.10.2014 JP 2014205675
(71) Applicant: Furukawa Electric Co. Ltd., Tokyo 100-8322 (JP)
(72) Inventor: TSUKAMOTO, Masayoshi, Tokyo 100-8322 (JP); HOSHINO, Yutaka, Tokyo 100-8322 (JP)
(74) Representative: Goddar, Heinz J.
(86) International application number: PCT/JP2015/057726
(87) International publication number: WO 2016/056264

(57) **Abstract**

Optical fiber cable 1 is composed of an optical fiber core 3, a tension member 7, an outer sheath 11, and so forth. The optical fiber core 3 comprises a glass wire and a resin-coated part, which is further coated by a transparent member 5 on its outer periphery. The transparent member 5 is, for example, urethane acrylate, PVC, nylon, and so forth. The transparent member 5 preferably has a total light transmittance, defined by JIS K7361-1, of 60% or higher. The reason is that when the total light transmittance is less than 60%, the color tone of the optical fiber core 3 (transparent member 5) becomes intense and stands out. Additionally, it is preferable that the total light transmittance of the transparent member 5 is 80% or more.

## Description

### TECHNICAL FIELD

The present invention relates to an optical fiber cable and so forth that is inconspicuous when installed indoor.

### Background Art

Usually, when optical fiber cable is drawn indoor, an indoor cable is used. The indoor cable is connected to the optical line termination device and connected to various fiber-optic utilizing equipments by LAN cables and so forth.

As such optical fiber cable, for example, an optical fiber cable comprising tension members, an optical fiber core arranged between the tension members, and an outer sheath that wraps these together, with one or more cable sheath notch arranged along the periphery of the outer sheath in the longitudinal direction, is known (Patent Document 1).

### RELATED ART

### Patent Documents

Patent Document 1: JP2008-A-65038

### SUMMARY

However, when the indoor cable is installed indoors, the indoor cable tends to stand out, thereby spoiling the overall appearance of the interior. Further, when using an optical cord and so forth to install indoor, it was necessary to connect such optical cord with the indoor cable.

The present invention was made in view of such problems, and its object is to provide an optical fiber and so forth that does not spoil the appearance of the interior, which is also excellent in installation workability.

In order to achieve the above-described object, the first invention provides an optical fiber cable, which comprises an optical fiber core, tension members arranged on both sides of the optical fiber core in a cross section vertical to the longitudinal direction, and a first outer sheath that is arranged in such a way so as to cover the tension member and the optical fiber core, wherein the optical fiber core is covered by a transparent member.

It is preferable that the transparent member has a total light transmittance, defined by JIS K7361-1, of 60% or higher.

The first outer sheath may compose an indoor cable, and a second outer sheath, which is arranged in such a way so as to cover the indoor cable and a supporting wire that is positioned on the side of the indoor cable, may compose a drop cable that incorporates the indoor cable.

The first outer sheath may have a size of 1.6 mm x 2.0 mm, the transparent member may have an outer diameter of 0.9 mm, and the tension members may be made of steel wire or poly(p-phenylenebenzobisoxazole) fiber-reinforced plastic with a diameter of 0.25 to 0.3 mm.

The cross-sectional shape of the tension members may be substantially rectangular, and the tension members may be positioned in such a way so that the optical fiber core is inserted between the tension members on their long sides.

A flat part may be formed on at least part of the cross section vertical to the longitudinal direction of the transparent member.

The outer diameter of the optical fiber core with the transparent member removed may be 0.25 mm.

According to the first invention, since the optical fiber core is covered by a transparent member, it is less likely to spoil the appearance when installed indoors. For example, although colored optical fiber cores are used as the optical fiber core in order to differentiate optical fiber cores or to enhance visibility, in the present invention, the optical fiber core is covered by a transparent member, without the use of color. Thus, since the optical fiber core is composed of a transparent member, a transparent glass wire and a resin cover, the optical fiber core becomes inconspicuous.

In particular, such effect is larger when the total light transmittance is 60% or higher.

Further, by extracting only the optical fiber core covered by the transparent member and installing indoors, connection of the optical fiber core with an indoor cable and so forth, including an outer sheath, can be abbreviated.

Furthermore, by composing a drop cable that incorporates the indoor cable including the optical fiber core, the joints between the drop cable and the indoor cable can also be abbreviated.

Note that as described previously, conventionally, the outer-most periphery of the optical fiber core was colored, in order to enhance its visibility. However, in the present invention, since the entire optical fiber core is transparent, visibility during the process may become poor. Therefore, by using a large-diameter optical fiber core, visibility can be enhanced and workability may be improved. Further, since the mechanical property is improved by using a large-diameter optical fiber core, it is more favorable in the process of installing the optical fiber core. For example, by having an outer diameter of 0.9 mm, the workability and mechanical property are enhanced and conventionally used optical fiber connection members and so forth may be utilized.

On the other hand, when the size of the outer sheath is 1.6 mm x 2.0 mm, the outer diameter of the optical fiber core covered by the transparent member becomes larger than that of conventional optical fibers, and the arrangement of the tension member becomes difficult. Thus, in the present invention, the outer diameter of the tension member is made small, while, in order to obtain the same level of allowable tension as that of conventional optical fibers, the tension members may be made of steel wire or poly(p-phenylenebenzobisoxazole) fiber-reinforced plastic with a diameter of 0.25 to 0.3 mm. In this way, the optical fiber core with a transparent member can be applied while ensuring the same level of outer sheath size and allowable tension.

Further, by making the shape of the cross section vertical to the longitudinal direction of the tension members substantially rectangular, and positioning the tension members in such a way so that the optical fiber core is inserted between the tension members on the long sides of the tension members, the cross-sectional area of the tension member can be made large. Thus, the same effects as those described above are obtained, while at the same time, the bending rigidity of the cable increases and facilitating the stringing of the cable by tucking into a conduit line.

By forming a flat part on at least part of the cross section vertical to the longitudinal direction of the transparent member, the process of adhering onto walls and so forth becomes easier.

Further, if the outer diameter of the optical fiber core with the transparent member removed is 0.25 mm, conventional optical connectors and so forth may be utilized.

The second invention is a method of installing optical fiber cable, which comprises the use of an indoor cable and an optical fiber core, wherein the indoor cable incorporates the optical fiber core, and comprises a first outer sheath, which is arranged in such a way so as to cover the optical fiber core and tension members, which are arranged on both sides of the optical fiber core in a cross section vertical to the longitudinal direction, wherein the optical fiber core is covered by a transparent member, and the indoor cable is arranged in a part that passes through a building from outside the building to inside the building, the fist outer sheath and the tension members are removed inside the building, thereby extracting the optical fiber core, and the optical fiber core is connected to an optical line termination device.

A drop cable, which incorporates the indoor cable and comprises a second outer sheath, which is arranged in such as way so as to cover the indoor cable and a supporting wire that is positioned on the side of the indoor cable in a cross section vertical to the longitudinal direction, may be used, and outside the building, the second outer sheath and the supporting wire of the drop cable are removed, thereby extracting the indoor cable, and the extracted indoor cable may be arranged.

According to the second invention, because the indoor optical fiber core is transparent, the appearance of the interior will not be spoiled. Further, the joints between the optical fiber core and the indoor cable may be reduced. Furthermore, because the drop cable incorporates the indoor cable, the joints between the indoor cable and the drop cable can also be reduced.

### Effect of the Invention

According to the present invention, an optical fiber cable and so forth that does not spoil the appearance of the interior, which is also excellent in installation workability, can be provided.

### BRIEF DESCRIPTION OF DRAWINGS

[FIG. 1] FIG. 1 is a sectional scheme of the optical fiber cable 1.
[FIG. 2] FIG. 2 is a conceptual scheme that shows the method for installing the optical fiber cable 20.
[FIG. 3] FIG. 3 is a sectional scheme of the optical fiber cable 1a.
[FIG. 4] FIG. 4 is a sectional scheme of the optical fiber cable 1b.
[FIG. 5] FIG. 5 is a sectional scheme of the optical fiber cable 1c.
[FIG. 6(a)] FIG. 6(a) is a sectional scheme of the optical fiber cable 1d.
[FIG. 6(b)] FIG. 6(b) is a sectional scheme of the optical fiber cable 1e.

### DESCRIPTION OF SOME EMBODIMENTS

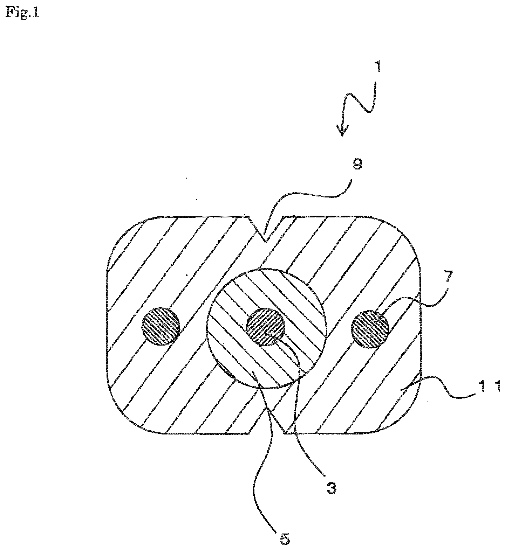

Hereinafter, embodiments of the present invention will be described with reference to the Figures. FIG. 1 is a sectional scheme of the optical fiber cable 1. The optical fiber cable 1 is composed of an optical fiber core 3, tension members 7, and a first outer sheath 11 and so forth.

The optical fiber core 3 and tension members 7 are integrated by the first outer sheath 11. As the first outer sheath 11, for example, polyolefin materials with fire-resistance, low friction and weather resistance added thereto may be applied.

On the top and bottom surfaces (the outer peripheral surfaces vertical to the direction at which the tension members 7 are provided) of the outer sheath 11 of the optical fiber core 3, notches 9 are formed at positions facing each other. By rupturing the outer sheath 11 from the top and bottom notches 9 using a cable splitter or nippers, the optical fiber core 3 (transparent member 5) may be separated from the tension members 7 and the outer sheath 11 and extracted. That is, the transparent member 5 and the outer sheath 11 are not adhered.

The optical fiber core 3 comprises a glass wire and a resin coating part, and is further covered by a transparent member 5 on its outer periphery. As the optical fiber core 3 without the transparent member 5, for example, a conventional optical fiber core with a 0.25 mm diameter may be used. In this way, after extracting the optical fiber core 3, by removing only the transparent member 5 as required, it can be used as a conventional optical fiber core.

As the transparent member 5, for example, PVC, styrene elastomers, fluorocarbon rubbers, silicone rubbers, polycarbonates, nylon, urethane, polyester elastomers, thermoplastic resins such as low molecular weight polyethylene, and ultraviolet curing resins such as urethane acrylate, may be applied. The transparent member 5 is preferably one with a total light transmittance, defined by JIS K7361-1, of 60% or higher. This is because when the total light transmittance is lower than 60%, the color tone of the optical fiber core 3 (transparent member 5) becomes intense and tends to stands out. Note that it is further preferable that the total light transmittance of the transparent member 5 is 80% or higher.

The outer diameter of the optical fiber core 3 (transparent member 5) is preferably, for example, 0.5 mm or 0.9 mm. If the outer diameter is 0.5 mm or 0.9 mm, connectors and so forth used for conventional optical fibers may be utilized. Note that because the optical fiber core 3 is composed entirely of transparent materials, its visibility is low, compared to conventionally used optical fiber cores (having a colored layer on the outer periphery), and workability worsens. Further, because the outer diameter of the optical fiber core 3 is 0.25 mm, its mechanical strength is weaker and wiring must be performed with caution. Therefore, in the present invention, it is preferable that one with a larger outer diameter of 0.9 mm is used. Further, as required, the outer diameter may be 0.9 mm or larger.

On both sides of the optical fiber core 3, a pair of tension members 7 are arranged, separate from the optical fiber core 3. As the tension members 7, conventionally used materials such as galvanized steel wire and plastics reinforced by fibers such as monofilaments of PEN and PET, aramid fibers, glass fibers, and PBO (poly(p-phenylenebenzobisoxazole)) may be used.

As shown in FIG. 1, the optical fiber cable 1 preferably has a size and shape similar to indoor cables that are generally used. That is, the size of the outer sheath 11 is preferably 2.0 mm x 3.1 mm or 1.6 mm x 2.0 mm. In this way, connectors and gripping members that have been used conventionally may be utilized as they are.

When the size of the optical fiber cable 1 is 1.6 mm x 2.0 mm, having a transparent member 5 with an outer diameter of 0.9 mm makes it difficult to arrange tension members 7 with outer diameters of 0.5 mm. In such case, it is preferable that the outer diameters of the tension members 7 are about 0.25 mm to 0.3 mm. Here, by using materials such as steel wire and PBO fiber-reinforced plastic as the material for the tension members 7, the same level of allowable tension as that of conventional optical fiber cables may be ensured.

In the present invention, in order to ensure good workability by enlarging the size of the optical fiber core 3 (transparent member 5), it is preferable that the outer diameter of the tension members 7 are smaller than that of the optical fiber core 3 (transparent member 5), as in the above case.

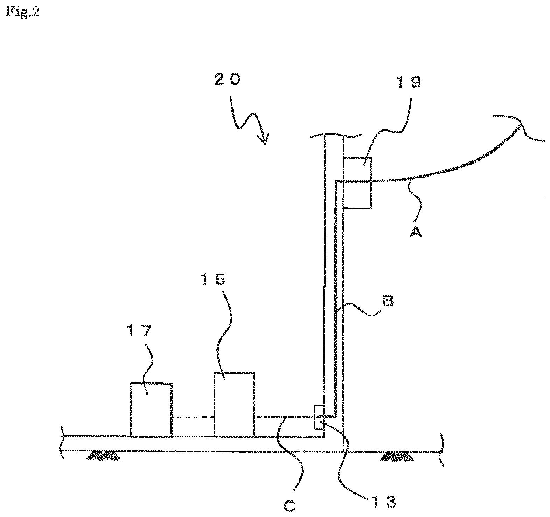

Next, the method of installing optical fiber cable using optical fiber cable 1 will be described. FIG. 2 is a conceptual scheme that shows the method for installing optical fiber cable 20. Outdoors, a drop cable is used up to the optical cabinet 19 of the building (A in the figure). In the optical cabinet 19, the drop cable and the indoor cable are connected. The indoor cable is installed from outside the building to the optical outlet 13 indoors (B in the figure). From the optical outlet 13 to the optical line termination device 15 (C in the figure), the optical fiber core 3 having a transparent member 5 is installed. Note that after the optical line termination device 15, LAN cables and so forth are used to connect to various fiber-optic utilizing equipments such as a personal computer.

In the present embodiment, the optical fiber cable 1 can be applied from the optical cabinet 19 to the optical line termination device 15 (B, C in the figure). In this case, first, the optical fiber cable 1 (indoor cable) is connected to the drop cable and installed inside the wall. At the optical outlet 13, the outer sheath 11 and the tension members 7 of the optical fiber cable 1 are removed, thereby exposing the transparent member 5, and extracting the optical fiber core 3 with the transparent member 5. Further, the optical fiber core 3 is wired to the optical line termination device 15 and connected. Thus, the installation process is completed.

In the present invention, since the indoor cable is not installed directly to the optical line termination device 15, as was the case for conventional optical fiber cables, the indoor cable is not wired indoors. Therefore, the interior appearance is not spoiled. Further, since the optical fiber core 3 is covered by a transparent member 5, it does not stand out indoors.

Hence, according to the present embodiment, since the indoor cable and so forth is not exposed indoors and the optical fiber core 3 is covered by a transparent member 5, the interior appearance is not hindered. Further, since connection between indoor cables and arrangement of joints between the indoor cable and the optical fiber core is not necessary, the workability of the installation process is better.

Note that conventionally, the installation of optical fiber cable in a way that the optical fiber core 3 alone is exposed indoors was not considered and indoor cables and LAN cables were used. In contrast, in the present invention, use of the optical fiber core 3 alone up to the optical line termination device 15 indoors is a novel idea. Further, even if indoor installation is performed using the optical fiber core 3 alone, conventional colored cores could ruin the appearance, and thus required caution in wiring. However, since a transparent member 5 is used in the present invention, the optical fiber core 3 does not stand out and its mechanical strength is enhanced. Further, since use of the transparent member 5 required enlarging the outer diameter of the optical fiber core 3, excellent visibility and handleability is obtained.

Further, because such optical fiber core 3 is incorporated in the indoor cable, joints between the indoor cable and the optical fiber core 3 become unnecessary. For this reason, the connection process can be abbreviated during the installation process. Further, since the optical outlet 13 only needs to hold the indoor cable and the optical fiber core, it can be downsized, compared to conventional outlets that required accommodating connectors and so forth. Thus, the interior appearance can be further improved.

Note that since it is difficult to install the optical fiber core 3 inside the wall, it is impossible to compose all of B and C in the figure with the optical fiber core 3 alone. Consequently, for inside the wall, it is necessary to use an indoor cable (or drop cable). Therefore, conventionally, the indoor cable was installed indoors as it is. In the present invention, by incorporating the optical fiber core 3 covered with a transparent member 5 in the indoor cable, the installation workability and appearance retainability can both be accomplished.

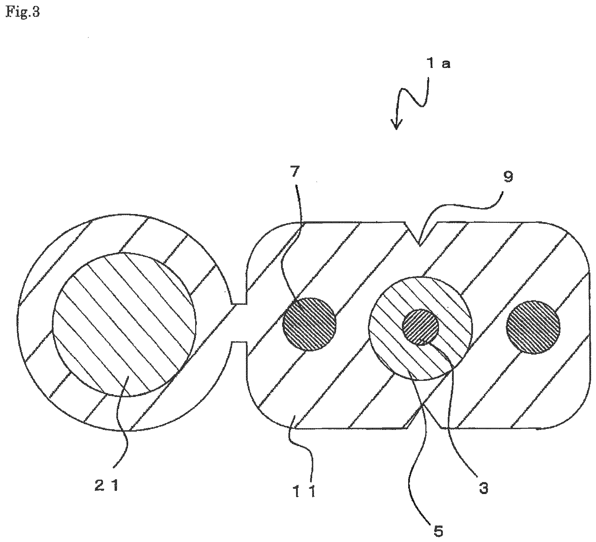

Next, a second embodiment will be described. FIG. 3 is a scheme that shows the optical fiber cable 1a. Note that in the following description, components that show the same functions as those described for optical fiber cable 1 are referred to with the same notations and redundant descriptions will be abbreviated.

Optical fiber cable 1a has substantially the same composition as optical fiber cable 1, but differs in that it has a supporting wire 21. In the cable part in which the optical fiber core 3 is arranged, a supporting wire part is coupled. The supporting wire part has a supporting wire 21. The supporting wire 21 is for supporting the optical fiber cable 1a when installing the optical fiber cable 1a. As the supporting wire 21, for example, galvanized steel wire may be utilized. That is, the optical fiber cable 1a is used as a drop cable.

Next, the method of installing optical fiber cable using optical fiber cable 1a will be described. In FIG. 2, from outdoors to the optical outlet 13 (A and B in the figure), the optical fiber cable 1a is installed as a drop cable, and from the optical outlet 13 to the optical line termination device 15, only the optical fiber core 3 covered with the transparent member 5 is installed. In this case, the drop cable and the indoor cable do not require connection at the optical cabinet 19.

Thus, according to the second embodiment, effects similar to those of the first embodiment can be obtained. That is, the optical fiber cable of the present invention is applicable as an indoor cable or a drop cable.

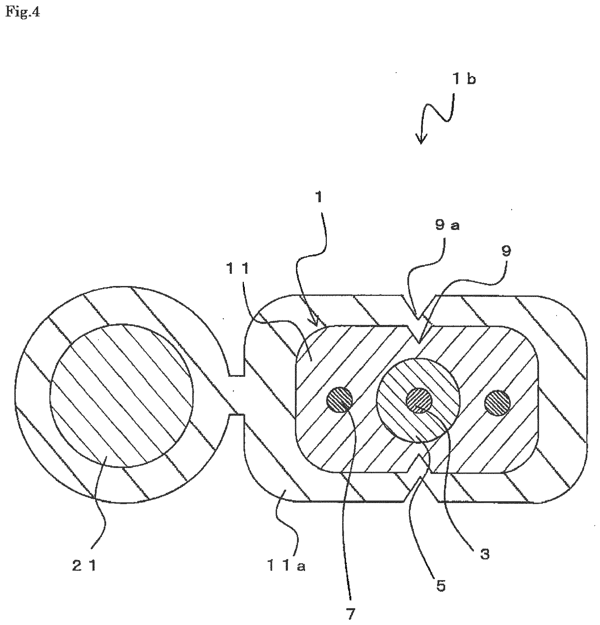

Next, a third embodiment will be described. FIG. 4 is a scheme of the optical fiber cable 1b. Optical fiber cable 1b has substantially the same composition as optical fiber cable 1a, but differs in that it incorporates an indoor cable.

On the side of the aforementioned optical fiber cable 1 (indoor cable) is arranged a supporting wire 21. In this state, an outer sheath 11a (second outer sheath) is provided in a way that covers outer sheath 11 (first outer sheath) of the optical fiber cable 1 and the supporting wire 21. That is, a drop cable is composed of outer sheath 11a.

On the outer periphery of the outer sheath 11a, notches 9a are formed at positions facing each other. By rupturing the outer sheath 11a from the top and bottom notches 9a using a cable splitter or the like, the optical fiber cable 1 inside can be separated from the supporting wire 21 and the outer sheath 11a and extracted. That is, outer sheath 11 and outer sheath 11a are not adhered or adhered with a weak adhesive force.

Next, the method of installing optical fiber cable using optical fiber cable 1b will be described. In FIG. 2, from outdoors to the optical outlet 13 (A in the figure), the optical fiber cable 1b is installed as a drop cable. From the optical cabinet 19 to the optical outlet 13 (B in the figure), only the optical fiber cable 1 is extracted from optical fiber cable 1b and installed. Further, from the optical outlet 13 to the optical line termination device 15, only the optical fiber core 3 covered with the transparent member 5 is installed. In this case, the drop cable and the indoor cable do not require connection at the optical cabinet 19. Further, since the indoor cable can be installed inside the wall, its workability is good.

Thus, according to the third embodiment, effects similar to those of the first embodiment can be obtained. Further, from the drop cable outdoors to the optical line termination device 15 indoors, optical joints such as connectors become unnecessary.

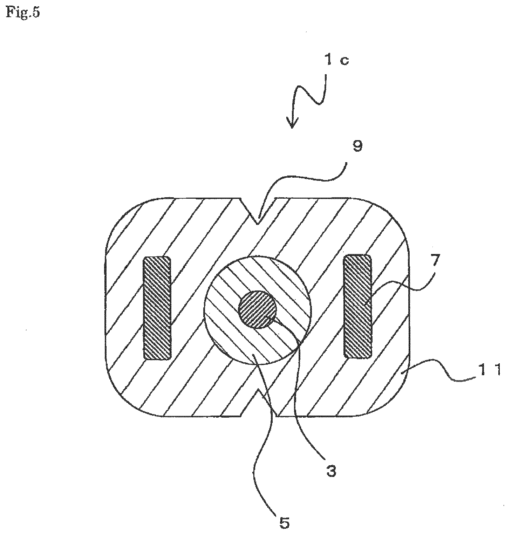

Next, a fourth embodiment will be described. FIG. 5 is a scheme that shows optical fiber cable 1c. The optical fiber cable 1c has substantially the same composition as optical fiber cable 1, but differs in the shape of the tension members 7.

In optical fiber cable 1c, the shape of the cross section vertical to the longitudinal direction of the tension members 7 are substantially rectangular. As described previously, in the present invention, since it is necessary to enlarge the outer diameter of the optical fiber core 3 by the transparent member 5, when applying to small-sized indoor cables and so forth, the tension members 7 must be down-sized. In contrast, when the cross-sectional area of the tension members 7 become small, materials with higher strength must be selected.

In the present embodiment, the tension members 7 are to have substantially rectangular cross-sectional shapes and are positioned so that the short sides face the top and bottom direction. That is, the tension members 7 are positioned in such a way so that the optical fiber core 3 is inserted between the tension members 7 on their long sides. By doing so, the length in the width direction (the side direction of the tension member) in which the tension members 7 positioned on both sides of the optical fiber core 3 take up can be suppressed. Further, sufficient cross-sectional area can be secured.

Note that in such a case, as the material for the tension members 7, rectangular-shaped wires such as piano wires according to JIS G3502 or hard steel wires according to JIS G3506 may be utilized.

According to the fourth embodiment, effects similar to those of the first embodiment can be obtained. Further, even in small-sized indoor cables, the moment of inertia of area can be enhanced by positioning the tension members 7, and stringing of the cable by tucking into a conduit line is facilitated.

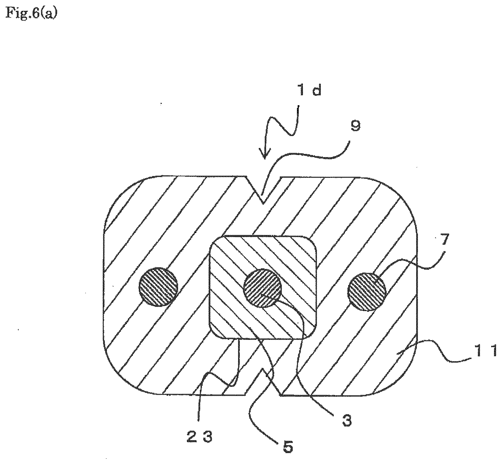

Next, a fifth embodiment will be described. FIG. 6(a) is a scheme that shows optical fiber cable 1d. Optical fiber cable 1d has approximately the same composition as optical fiber cable 1, but differs in the cross-sectional shape of the transparent member 5.

The cross-sectional shape of the transparent member 5 of the optical fiber cable 1d is substantially rectangular rather than circular. That is, in the cross section, a flat part 23 is formed on at least part of the outer peripheral surface of the transparent member 5. (When rectangular, all four sides become the flat part 23.)

By having a flat part 23 formed on the outer peripheral surface of the transparent member 5, when adhering to a wall surface and so forth indoors, the flat part 23 can be used as an adhesion surface. Thus, compared to a circular cross section, it becomes easier to adhere the transparent member 5 on to a wall and so forth.

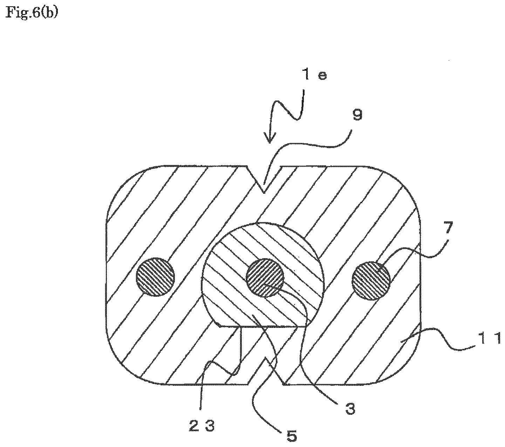

Note that the cross-sectional shape of the transparent member 5 does not necessarily have to be an approximate square shape as shown in the figure, but may be rectangular or trapezoidal. Further, as long as a flat part 23 is formable, it may be an optical fiber cable 1e as shown in FIG 6(b). The transparent member 5 of the optical fiber cable 1e has a shape in which part of its circular cross-sectional shape is cut off, and a flat part 23 is partly formed. In this way, in the present embodiment, the cross-sectional shape of the transparent member 5 may be substantially rectangular or substantially circular, as long as a flat part 23 is formed on at least part of it.

According to the fifth embodiment, the same effects as those for the first embodiment can be obtained. Further, adhesion of the transparent member 5 (optical fiber core 3) to the wall and so forth becomes easy. Note that as shown in FIG 6(a), FIG 6(b), a transparent member 5 with a flat part 23 may be applied in optical fiber cables 1a, 1b, and 1c shown in FIG. 3 to FIG. 5.

Although embodiments of the present invention have been described in detail above with reference to the accompanying figures, the present invention is not influenced by such embodiments. It should be obvious to those in the field that examples of various changes and modifications are included within the realm of the technical idea of the present invention, and it should be understood that such examples are included in the technical scope of the present invention.

### DESCRIPTION OF NOTATIONS

- 1, 1a, 1b, 1c, 1d, 1e: optical fiber cable

- 3: optical fiber core
- 5: transparent member
- 7: tension members
- 9, 9a: notch
- 11, 11a: outer sheath
- 13: optical outlet
- 15: optical line termination device
- 17: fiber-optic utilizing equipment
- 19: optical cabinet
- 20: method for installing optical fiber cable
- 21: supporting wire
- 23: flat part

## Claims

1. An optical fiber cable, which comprises:
an optical fiber core,
tension members arranged on both sides of the optical fiber core in a cross section vertical to the longitudinal direction, and
a first outer sheath that is arranged in such a way so as to cover the tension member and the optical fiber core, wherein
the optical fiber core is covered by a transparent member.

2. The optical fiber cable according to Claim 1, wherein the transparent member has a total light transmittance, defined by JIS K7361-1, of 60% or higher.

3. The optical fiber cable according to Claim 1, wherein
the first outer sheath composes an indoor cable, and
a second outer sheath, which is arranged in such a way so as to cover the indoor cable and a supporting wire that is positioned on the side of the indoor cable, composes a drop cable that incorporates the indoor cable.

4. The optical fiber cable according to Claim 1, wherein the first outer sheath has a size of 1.6 mm x 2.0 mm, the transparent member has an outer diameter of 0.9 mm, and the tension members are made of steel wire or poly(p-phenylenebenzobisoxazole) fiber-reinforced plastic with a diameter of 0.25 to 0.3 mm.

5. The optical fiber cable according to Claim 1, wherein the shape of the cross section vertical to the longitudinal direction of the tension members are substantially rectangular, and the tension members are positioned in such a way so that the optical fiber core is inserted between the tension members on the long sides of the tension members.

6. The optical fiber cable according to Claim 1, wherein a flat part is formed on at least part of the cross section vertical to the longitudinal direction of the transparent member.

7. The optical fiber cable according to Claim 1, wherein the outer diameter of the optical fiber core with the transparent member removed is 0.25 mm.

8. A method of installing optical fiber cable, which comprises:
the use of an indoor cable and an optical fiber core, wherein
the indoor cable incorporates the optical fiber core, and comprises a first outer sheath,
which is arranged in such a way so as to cover the optical fiber core and tension members, which are arranged on both sides of the optical fiber core in a cross section vertical to the longitudinal direction, wherein
the optical fiber core is covered by a transparent member, and
the indoor cable is arranged in a part that passes through a building from outside the building to inside the building,
the fist outer sheath and the tension members of the indoor cable are removed inside the building, thereby extracting the optical fiber core, and
the optical fiber core is connected to an optical line termination device.

9. The method of installing optical fiber cable of Claim 8, wherein
a drop cable, which incorporates the indoor cable and comprises a second outer sheath, which is arranged in such as way so as to cover the indoor cable and a supporting wire that is positioned on the side of the indoor cable in a cross section vertical to the longitudinal direction, is used and
outside the building, the second outer sheath and the supporting wire of the drop cable are removed, thereby extracting the indoor cable, and
the extracted indoor cable is arranged.
